# EUROPÄISCHE PATENTANMELDUNG

(11) **EP 4 813 548 A1**
(43) Veröffentlichungstag der Anmeldung: **30.09.2026**
(21) Anmeldenummer: 25166383.7
(22) Anmeldetag: 26.03.2025
(51) Int. Cl.: B22F 1/068, B22F 3/22, B22F 1/10, B22F 3/10, B22F 5/10, B22F 7/06, C22C 33/02, H01F 1/22, H01F 1/26, H01F 1/28, H01F 3/02, H02K 1/02

(54) **VERFAHREN ZUR HERSTELLUNG EINES MAGNETBLECH, MAGNETBLECH, BLECHPAKET UND ELEKTRISCHE MASCHINE**

(71) Anmelder: Siemens Aktiengesellschaft, 80333 München (DE)
(72) Erfinder: DENNELER, Stefan, 81371 München (DE); RIEGER, Gotthard, 80636 München (DE); SCHMIDT, Alexander, 84034 Landshut (DE); SCHUH, Carsten, 85598 Baldham (DE); SOLLER, Thomas, 94469 Deggendorf (DE)
(74) Vertreter: Siemens Patent Attorneys

(57) **Zusammenfassung**

Die Erfindung betrifft ein Verfahren zu Herstellung eines Magnetblechs (2) einer elektrischen Maschine (3), umfassend folgende Schritte
- Aufbringen einer viskosen Masse (4) mittels eines Rakelverfahrens (6, 7) auf eine Trägerfläche (8), wobei ein flächiger Grünkörper (10) entsteht,
- wobei die viskose Masse (4) als funktionale Bestandteile Partikel (12) aufweist, die zu mehr als 96 gew. % aus Eisen bestehen,
- selektives Aufbringen von Keimpartikeln (14) auf die Oberfläche (16) des flächigen Grünkörpers,
- wobei die Keimpartikel (14) zu mehr als 90 Gew. % aus einer Eisen-Kobalt Legierung bestehen,
- Trocknen und Entbindern des flächigen Grünkörpers (10),
- Thermische Behandlung (18) des flächigen Grünkörpers (10) in Form eines Sinterprozesses.

## Beschreibung

Die Erfindung betrifft ein Verfahren zur Herstellung eines Magnetblech nach Anspruch 1, ein Magnetblech nach Anspruch 9, ein Blechpaket nach Anspruch 11 und eine elektrische Maschine nach Anspruch 12

Magnetisch flussführende Komponenten in elektromagnetischen Maschinen wie Motoren, Generatoren und Transformatoren bestehen im Regelfall aus (magnetisch) homogenen und isotropen Werkstoffen, z.B. Weichferrite oder Stapel (Blechpaket) von weichmagnetischen Blechen (Magnetblechen). Im Betrieb sind die Magnetmaterialien zeitlich, aber insbesondere auch räumlich unterschiedlich belastet/magnetisiert. Im Design wird zwar versucht, die magnetische Aussteuerung so zu wählen, dass ein Kompromiss mit den weiteren Anforderungen, z.B. mechanische Festigkeit und thermische Belastung, gefunden wird. Dennoch kommt es im Magnetmaterial, insbesondere in der Nähe von Polen/Luftspalten, zu Sättigungserscheinungen, die zu erhöhten Verlusten und Erwärmung führen, die die Effizienz der elektrischen Maschine reduzieren, in rotierenden Maschinen insbesondere auch das Drehmoment begrenzen. Insbesondere in Rotoren von Motoren werden ebenfalls räumliche Kompromisse zwischen Festigkeit bei hoher Drehzahl und magnetisch optimaler Flussführung gemacht (sowohl beim eingesetzten Material als auch bzgl. Design).

Die mechanisch- elektromagnetische Optimierung von Magnetkernen, Stator- und Rotorblechpaketen wird bisher durch die Auswahl des (weich-) magnetischen Werkstoffs (gekennzeichnet durch Legierung, durch das Herstellungsverfahren und damit durch die Mikrostruktur) sowie Maßnahmen im Design (Zahnform, Verbindungsstege, Kühlbohrungen etc.) bestimmt. Obwohl die magnetische Belastung im Betrieb lokal sehr unterschiedlich ist, werden aus Gründen der Aufbautechnik und der strukturmechanischen Stabilität meist homogene Materialien eingesetzt und damit die oben beschriebenen technischen Kompromisse eingegangen. Für Anwendungen höchster Leistungsdichte werden FeCo-basierte Blechstapel eingesetzt, die dann aber ebenfalls magnetisch nicht optimal ausgenutzt werden. Zudem ist Kobalt ein teurer Materialbestandteil mit kritischer Verfügbarkeit, dessen Einsatz die Kosten für die elektrische Maschine anheben.

Die Aufgabe der Erfindung besteht darin, ein Verfahren zur Herstellung eines Magnetblechs, sowie ein Magnetblech und ein Blechpaket sowie eine elektrische Maschine bereitzustellen, die gegenüber thermischen und mechanischen Belastungen im Vergleich zu herkömmlichen elektrischen Maschinen verbessert ist und dabei höhere Leistungsdichten innerhalb der elektrischen Maschine bereitstellen kann.

Die Lösung der Aufgabe besteht in einem Verfahren zur Herstellung eines Magnetblechs nach Anspruch 1, einem Magnetblech nach Anspruch 9, einem Blechpaket nach Anspruch 11 sowie einer elektrischen Maschine nach Anspruch 12.

Das Verfahren zur Herstellung eines Magnetblechs einer elektrischen Maschine umfasst dabei folgende Schritte:
- Aufbringen einer viskosen Masse mittels eines Rakelverfahrens auf eine Trägerfläche, wobei ein flächiger Grünkörper entsteht,
- wobei die viskose Masse als funktionaler Bestandteil Partikel aufweist, die zu mehr als 96 gew.% aus Eisen bestehen,
- selektives Aufbringen von Keimpartikeln auf die Oberflächen des flächigen Grünkörpers,
- wobei die Keimpartikel zu mehr als 90 Gew.-% aus Eisenkobaltlegierung bestehen,
- Trocknen und Entbindern des flächigen Grünkörpers,
- thermische Behandlung des flächigen Grünkörpers in Form eines Sinterprozesses.

Eine viskose Masse ist hierbei eine Masse, die eine Viskosität aufweist, die dazu geeignet ist, die Masse mittels eines Rakels auf einer Trägerfläche gleichmäßig zu verteilen. Hierbei umfasst die Masse zum einen Hilfsmittel, beispielsweise Thixotropiermittel, Bindemittel und Verflüssiger, die dazu dienen, die viskose Masse bezüglich ihrer Viskosität einzustellen. Des Weiteren umfasst die viskose Masse, wie bereits als wesentlicher Bestandteil des Anspruchs erwähnt, Partikel, die bevorzugt aus Reineisen sind, jedoch mindestens 96 Gew.-% Eisen enthalten. Die Viskosität der viskosen Masse wird nach den Bedürfnissen des verwendeten Rakelverfahrens, bevorzugt ein Schlickerziehverfahren, beispielsweise ein Greentape-Verfahren oder ein Schablonendruckverfahren wie beispielsweise ein Siebdruckverfahren, eingestellt.

Unter einem Sinterprozess wird dabei eine thermische Behandlung verstanden, die dazu dient, die funktionalen Bestandteile, also in diesem Fall die Eisenpartikel so zu verdichten, dass diffusionsgesteuert an den Korngrenzen zwischen den Partikeln eine stoffschlüssige Verbindung eintritt, ohne dass dabei ein vollständiges Aufschmelzen der Eisenpartikel erfolgt, was zu einem Zerfließen des Grünkörpers während der thermischen Behandlung führen würde. Durch den Sinterprozess wird eine homogene Kornstruktur endkonturnah erzeugt.

Der Vorteil des beschriebenen Verfahrens besteht darin, dass ein wesentlicher Teil des Magnetblechs aus weichmagnetischem, nahezu (also mindestens 96%) reinem Eisenmaterial besteht, was für die Ummagnetisierung während des Betriebs der elektrischen Maschine von Vorteil ist und es wird dabei auf die Verwendung von teurem Kobalt als Legierungsbestandteil in wesentlichen Bereichen des Magnetblechs und somit auch eines weiteren Blechpaketes verzichtet, was die Kosten der elektrischen Maschine reduziert. Das beschriebene Kobalt, das die Keimpartikel als Eisen-Kobalt-Legierung bildet, wird nach dem beschriebenen Verfahren und nach dem daraus resultierenden Magnetblech lediglich lokal an Stellen aufgebracht, die aufgrund des Designs und der Konstruktion des Magnetblechs thermisch und mechanisch hoch belastet sind. Durch die Verwendung der Eisen-Kobalt-Legierung wird die maximale magnetische Induktion des Materials von 1,2 T auf 2,9 T erhöht, wodurch Wirbelstromverluste in diesen Bereichen reduziert werden. Die Erfindung zeigt somit ein Verfahren und ein Magnetblech, die jeweils für sich bewirken, dass eine lokale Materialanpassung zum einen zu einer höheren thermischen und mechanischen Belastbarkeit dieser Bereiche führt und dabei gleichzeitig die Kosten des gesamten Bauteils reduziert.

Bevorzugt wird als Rakelverfahren, wie bereits erwähnt, ein Schlickerziehverfahren oder ein Schablonendruckverfahren, unter das auch ein Siebdruckverfahren fällt, angewandt. Besonders vorteilhaft ist jedoch die Verwendung eines Schlickerziehverfahrens, da dies gegenüber dem Schablonendruckverfahren großtechnisch etwas leichter abbildbar ist. Bei dem Schlickerziehverfahren handelt es sich um ein Verfahren, das auch als Green Tape Verfahren bezeichnet wird, wobei mittels eines Rakels ein kontinuierliches Band des flächigen Grünkörpers erzeugt wird und auf das die Keimpartikel selektiv aufgebracht werden. Aus dem Schlickerziehverfahren und dem daraus gewonnenen kontinuierlichen Band als flächiger Grünkörper kann im Weiteren nach dem selektiven Aufbringen der Keimpartikel eine Separierung zu einem Magnetblechgrünkörper aus dem flächigen Grünkörper erfolgen. Grundsätzlich können diese beiden Schritte auch in umgekehrter Reihenfolge erfolgen. Es hat sich jedoch herausgestellt, dass eine Separierung nach dem Aufbringen der Keimpartikel günstiger ist.

Ferner ist es zweckmäßig, dass der flächige Grünkörper bzw. der Magnetblechgrünkörper mit den aufgebrachten Keimpartikeln einer Nachverdichtung unterzogen wird. Hierdurch werden die Keimpartikel in die Matrixstruktur des flächigen Grünkörpers bzw. des Magnetblechgrünkörpers eingearbeitet, wodurch sie im späteren Sinterprozess mit den dort vorhandenen Eisenpartikeln einen Legierungsprozess eingehen können. Die Nachverdichtung kann in zweckmäßiger Weise vor oder nach dem Separierungsprozess erfolgen.

Die Separierung des Magnetblechgrünkörpers aus dem flächigen Grünkörper erfolgt bevorzugt mittels eines Stanzverfahrens oder eines Schneideverfahrens. Bei einem Schneideverfahren kann beispielsweise ein Laserschneideverfahren oder ein Wasserstrahlverfahren zum Einsatz kommen.

Das Nachverdichten wiederum kann in vorteilhafter Weise mittels eines Rakels, mittels einer Walze oder mittels eines uniaxialen Pressens erfolgen.

Die Keimpartikel sind dabei bevorzugt plättchenförmig, oblatförmig oder stäbchenförmig ausgestaltet und weisen somit eine plattenförmige Struktur auf. Dabei ist es zweckmäßig, wenn das Aspektverhältnis, also das Verhältnis zwischen Höhe zur Länge des Plattenquerschnittes größer als 5 ist.

Ein weiterer Bestandteil der Erfindung ist ein Magnetblech, das durch ein Verfahren nach einem der Ansprüche 1 bis 9 hergestellt ist und das eine Zahnstruktur aufweist, die an einer Ringstruktur angebunden ist, wobei die Ringstruktur aus einer gesinterten, weichmagnetischen Eisen-Matrix besteht, die einen Eisenanteil von mehr als 96 Gew.-% aufweist und die Zahnstruktur eine Eisen-Kobalt-Legierung oder eine Eisen-Nitrid-Verbindung umfasst. Die Vorteile dieses Magnetblechs nach Anspruch 9 sind bereits bezüglich des Verfahrens nach Anspruch 1 beschrieben und sie bestehen insbesondere darin, die Zahnstruktur des Magnetblechs durch eine lokale Werkstoffanpassung während der Herstellung bezüglich der thermischen Belastbarkeit zu optimieren und dabei die Materialkosten an sich zu reduzieren.

Dabei ist es zweckmäßig, dass das Magnetblech im Bereich der Zähne eine maximale Sättigungsinduktion von mehr als 2,15 T (also größer als der Wert für Reineisen) aufweist. Dies führt dazu, dass die Wirbelstromverluste in diesem Bereich reduziert werden und dadurch eine geringere thermische Belastung im Bereich der Zähne auftritt. Diese Eigenschaften erfüllen insbesondere Eisen-Kobalt -Legierungen und nitriertes Eisen mit der Zusammensetzung Fe16N2. Bei der Sättigungsinduktion wird für verhältnismäßig kleine Magnetfelder, wie sie bei der Verwendung von weichmagnetischen Materialien in elektrischen Maschinen auftreten davon ausgegangen, dass diese im Wesentlichen der Sättigungs- Polarisation Jₛ entspricht.

Ein weiterer Bestandteil der Erfindung ist ein Blechpaket für eine elektrische Maschine, das aus einer Vielzahl von Magnetblechen nach einem der Ansprüche 9 oder 10 zusammengesetzt ist. Ferner ist eine elektrische Maschine Bestandteil der Erfindung, die ein Blechpaket nach Anspruch 11 als Stator oder Rotor umfasst.

Weitere Bestandteile der Erfindung und weitere Merkmale werden anhand der folgenden Figuren näher erläutert. Dabei handelt es sich um rein schematische Darstellungen der Erfindung, die keine Einschränkung des Schutzbereichs darstellen. Merkmale mit derselben Bezeichnung, in allerdings unterschiedlicher Ausgestaltungsform, werden dabei mit denselben Bezugszeichen versehen.

Dabei zeigen:
Figur 1 eine dreidimensionale Explosionsdarstellung einer typischen elektrischen Maschine mit Rotor und Stator,
Figur 2 eine schematische Darstellung eines Schlickerziehens eines flächigen Grünkörpers und dessen Weiterbearbeitung,
Figur 3 eine schematische Darstellung des Sinterprozesses von Magnetblechgrünkörpern zu Magnetblechen,
Figur 4 eine Darstellung des robotergestützten Stapels von Magnetblechen zu einem Blechpaket,
Figur 5 eine Draufsicht auf ein typisches Magnetblech für einen Stator,
Figur 6 eine schematische dreidimensionale Darstellung einer Mikrostruktur und
Figur 7 eine vergrößerte Darstellung eines Keimpartikels mit Querschnitt.

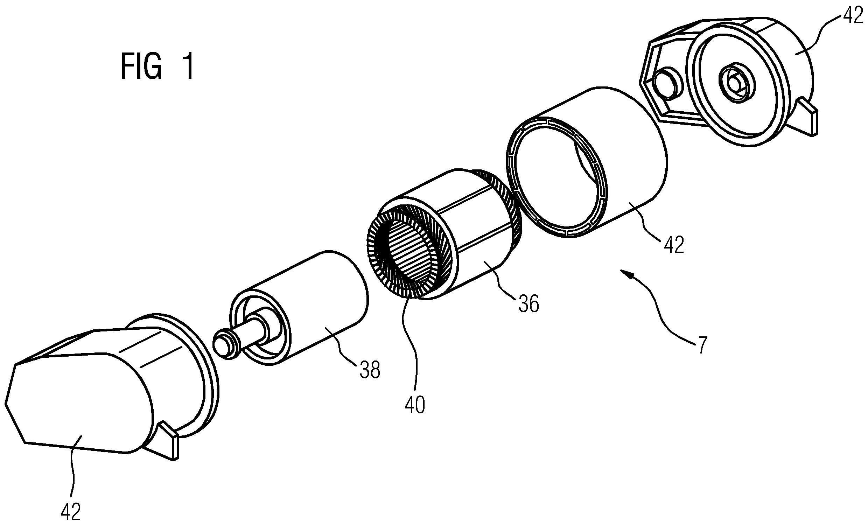

In Figur 1 ist schematisch zur Darstellung und Einordnung der im Weiteren beschriebenen Bauteile eine dreidimensionale Explosionsdarstellung einer elektrischen Maschine gegeben. Diese elektrische Maschine 3 (Motor oder Generator) weist dabei ein Gehäuse 42 auf, in dem zumindest ein Rotor 38 und ein Stator 40 angeordnet sind. Der Stator 40 wiederum weist hier dargestellt ein Blechpaket 36 auf, um das hier nicht näher beschriebene Spulen gewickelt sind.

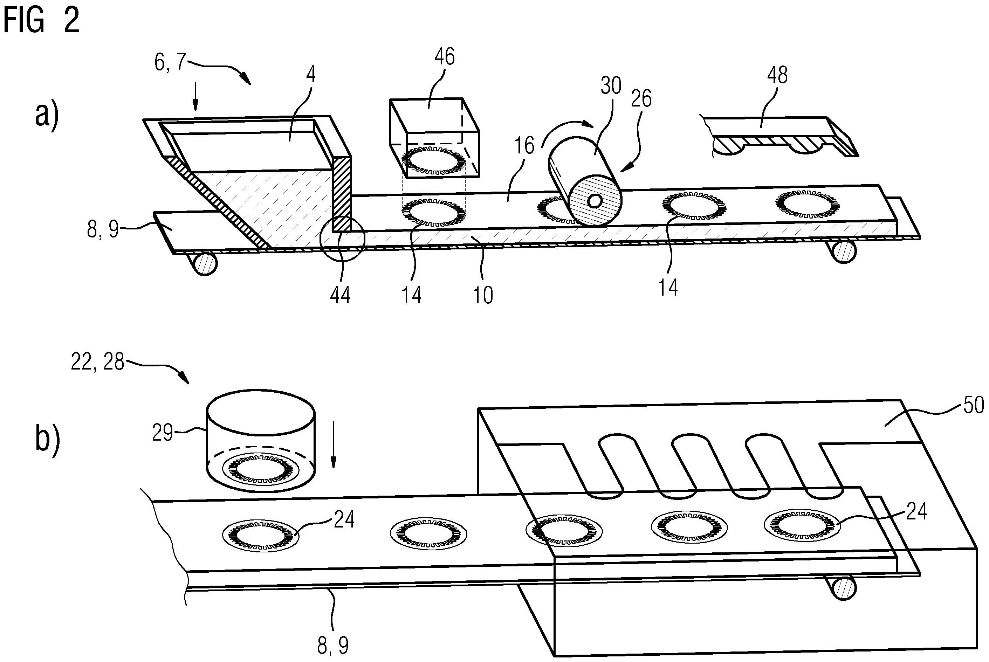

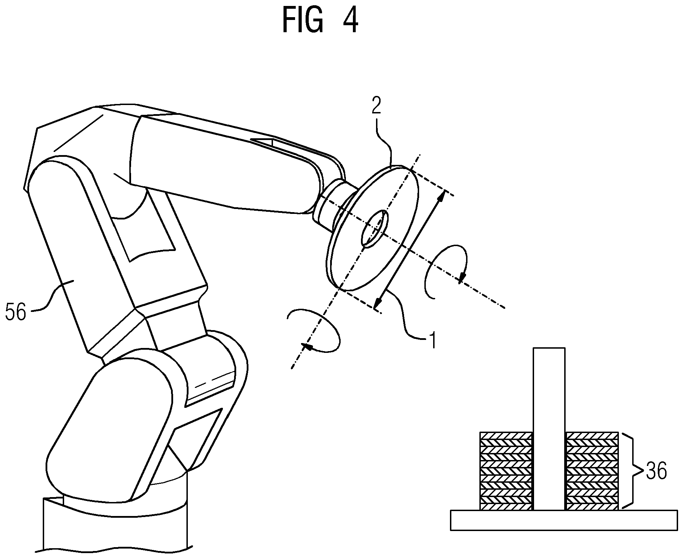

In Figur 2 ist ein Verfahren beschrieben, ein Magnetblech herzustellen, das im Weiteren in Figur 4 zu einem Blechpaket gestapelt wird. Im oberen Teil der Figur 2, der Figur 2a, wird zunächst eine viskose Masse 4 in einem Rakelverfahren 6, das hier in Form eines Schlickerziehverfahrens 7 ausgestaltet ist, auf eine Trägerfläche 8 in Form eines Förderbandes 9 aufgezogen. Hierbei entsteht ein flächiger Grünkörper 10, der üblicherweise eine Dicke von weniger als 200 oder 300 µm hat. Mit diesem Verfahren ist es möglich, Bänder (auch als green Tape bezeichnet) in Form eines flächigen Grünkörpern 10 zu ziehen, die eine sehr homogene Dicke aufweisen. Außerdem sind diese sehr dünn (< 300 µm) herstellbar, was auch an der Zusammensetzung der viskosen Masse 4 liegt. Diese viskose Masse 4 weist neben den funktionalen Bestandteilen, nämlich Reineisenpartikel (> 96 Gew.-% Eisen) 12, eine Vielzahl von Hilfsstoffen auf, auf die hier nicht näher eingegangen wird. Diese Hilfsstoffe sind in der Regel organische Hilfsstoffe oder Wasser, die im weiteren Verfahrensschritt thermisch entfernt werden (vgl. Entbinderungsvorrichtung in Fig. 2b). In einer weiteren Schrittfolge von Figur 2a werden auf den so gezogenen flächigen Grünkörper 10 mittels einer Partikelauftragvorrichtung 46 Keimpartikel 14 auf die Oberfläche 16 des flächigen Grünkörpers 10 aufgebracht. Hierfür gibt es verschiedene Möglichkeiten. In der Figur 2a ist angedeutet, dass es sich um eine Vorrichtung mit einer hier nicht näher dargestellten Siebschablone handelt, durch die die Partikel gezielt auf die Oberfläche 16 aufgestreut werden können. Es ist jedoch auch möglich, eine Suspension mit den Keimpartikeln 14 herzustellen und diese gezielt auf die Oberfläche 16 aufzusprühen. Ebenso entsteht ein vorgegebenes Muster von Keimpartikeln 14 auf der Oberfläche 16, auf dessen Wirkung im Weiteren noch eingegangen werden wird. Im Weiteren erfolgt eine Nachverdichtung 26, was im Ausführungsbeispiel nach Figur 2a durch eine Walze 30 erfolgt, wodurch die Keimpartikel 14 in das Volumenmaterial des flächigen Grünkörpers 10 erfolgt. Dies ist mit der Walze 30 ausgestaltet, was jedoch auch mittels eines weiteren Rakels oder mit einem uniaxialen Pressvorgang erzielt werden kann. Im weiteren Verlauf der Figur 2a erfolgt ein Trocknungsprozess des flächigen Grünkörpers 10 mittels einer Trocknungsvorrichtung 48.

Der flächige Grünkörper 10 wird weiter auf dem Förderband 9 geführt und in weiteren Bearbeitungsschritten erfolgt nun ein Separieren 22 eines Magnetblechgrünkörpers 24 aus dem flächigen Grünkörper 10. Im vorliegenden Beispiel erfolgt dies in Form eines Stanzverfahrens 28 mit Hilfe eines Stanzwerkzeuges 29. Beim Ausstanzen handelt es sich um ein großtechnisch einfach zu gestaltendes Verfahren, mittels dem aus dem kontinuierlichen flächigen Grünkörper 10 ein strukturierter Magnetblechgrünkörper 24 herausgetrennt wird. Alternativen zum Ausstanzen wären hier nicht dargestellte Verfahren wie Wasserstrahlschneiden oder Laserschneiden. Der in diesem Verfahren nicht weiter verwendete flächige Grünkörper 10 wird durch einen Rezyklierprozess in einfacher Weise erneut dem Schlickerziehverfahren 7 als aufbereitete viskose Masse zugeführt. In einem weiteren Schritt in Figur 2b erfolgt nun eine thermische Separierung von organischen Hilfsstoffen aus der viskosen Masse 4 bzw. dem flächigen Grünkörper 10 bzw. dem Magnetblechgrünkörper 24 in Form eines Entbinderungsprozesses in einer Entbinderungsvorrichtung 50. Die Entbinderungsvorrichtung 50 ist hier in Form eines Durchlaufofens ausgestaltet. Hierbei wird insbesondere nur noch der Magnetblechgrünkörper 24 auf Temperaturen von ca. 400°C erhitzt, wobei organische Stoffe aus dem verbleibenden Material thermisch zersetzt und ausgegast werden. Übrig bleibt wiederum ein Magnetblechgrünkörper 24, man spricht nun von einem entbinderten Grünkörper.

Hierbei ist anzumerken, dass es sich bei der Reihenfolge der einzelnen Teilprozesse um eine typische Reihenfolge, jedoch nicht um eine zwingende Reihenfolge handelt. Beispielsweise kann das Nachverdichten 26 erst nach dem Trocknungsprozess 48 erfolgen. Auch das Aufbringen der Keimpartikel 14 kann ebenfalls nach dem Trocknen 48 bzw. auch erst nach dem Separieren 22, prinzipiell auch erst nach dem Entbindern 50 erfolgen. Dies hängt von dem verwendeten Material für die viskose Masse 4 und das verwendete Rakelverfahren 6 ab. Das Rakelverfahren 6 kann auch in Form eines hier nicht dargestellten Siebdruckverfahrens, das ein Teilverfahren des Schablondruckverfahrens ist, sein. Bei einem hier nicht dargestellten Siebdruckverfahren würde sich beispielsweise das Separieren 22 erübrigen. Das Aufbringen von Keimpartikeln 14 wäre jedoch ebenfalls in einem Siebdruckverfahren notwendig, ebenfalls wie das Nachverdichten 26 und das Trocknen 48.

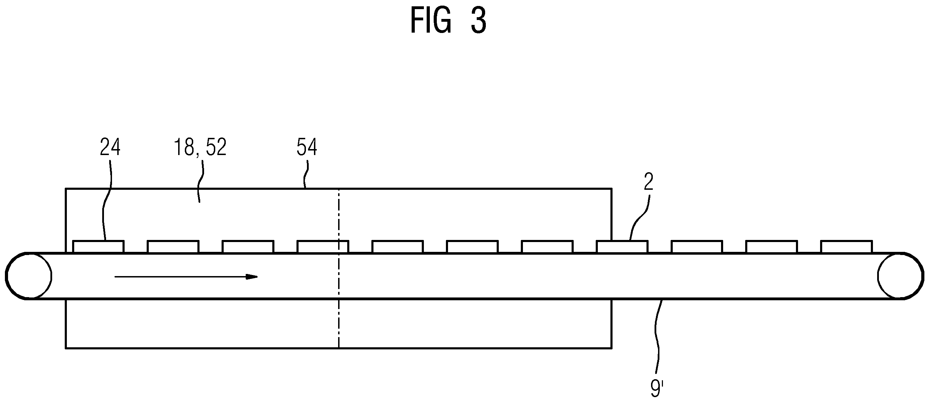

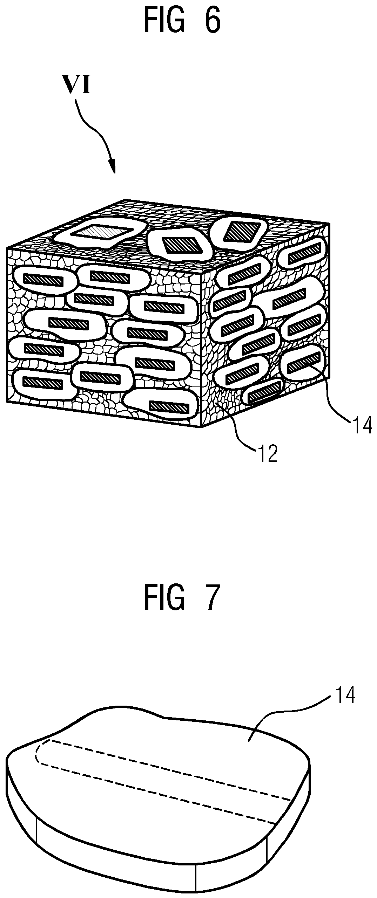

In einem weiteren Schritt gemäß Figur 3 werden die nun entbinderten Magnetblechgrünkörper 24 in einen Sinterofen 54 gegeben, wobei die thermische Behandlung 18 hierbei in Form eines Sinterprozesses 52 stattfindet. Wie bereits beschrieben, ist bei einem Sinterprozess 52 die Temperaturregelung im Sinterofen 54 so ausgelegt, dass zwischen einzelnen Partikeln 12 (vergleiche Figur 6) Diffusionsprozesse stattfinden, die zu einer stoffschlüssigen Verbindung, einer Sinterverbindung, führen, ohne dass dabei im wesentlichen Umfang Flüssigphase während des Sinterprozesses vorliegt. Wenn der Magnetblechgrünkörper 24 den Sinterprozess durchlaufen hat, wird das entsprechende Bauteil nun als Magnetblech 2 bezeichnet. Der hier in Figur 3 dargestellte Sinterofen 54 ist in Form eines Durchlaufofens ausgestaltet, wobei die einzelnen Magnetblechgrünkörper 24 wieder auf einem nun anders ausgestalteten Förderband 9' befördert werden.

In einem weiteren Schritt wird hier schematisch dargestellt, mittels eines Roboterarms 56 die einzelnen Magnetbleche 2 zu einem Magnetblechstapel in Form eines Blechpakets 36 aufgestapelt. Dieses Blechpaket 36 kann nun, wie in Figur 1 schematisch dargestellt, mit Spulen versehen werden und als Rotor oder Stator in der elektrischen Maschine 7 eingesetzt werden.

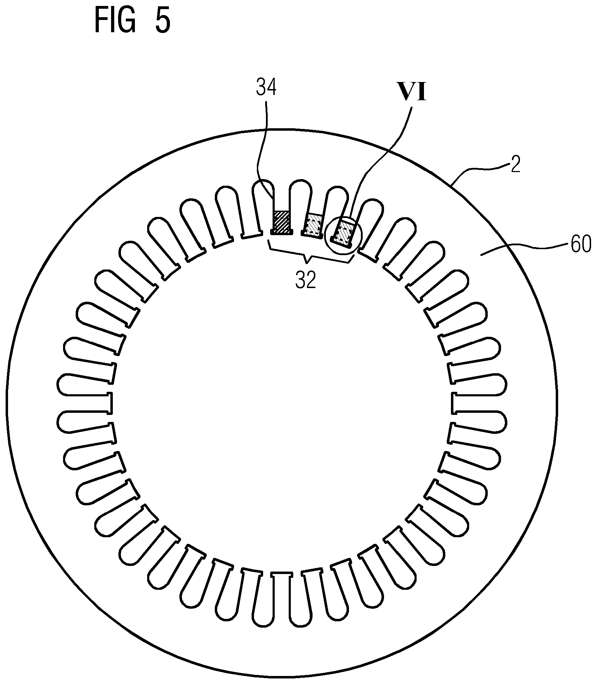

In Figur 5 ist eine Draufaufsicht auf ein Magnetblech 2 gegeben, das nach einem Verfahren gemäß der Figuren 2 bis 4 hergestellt ist. Das Magnetblech 2 weist dabei eine Ringstruktur 60 auf, an der eine Zahnstruktur 32 mit einzelnen Zähnen 34 angeordnet ist. Die Zähne 34 weisen jeweils in ihren Endbereichen eine selektive Werkstoffbehandlung auf, die aus dem Aufbringen von Keimpartikeln 14 herrühren. Dafür ist in der Figur 6 eine vergrößerte schematische Darstellung einer möglichen Mikrostruktur gegeben, wobei Reineisenpartikel 12 eine Matrix des Magnetblechs 2 bilden, wobei die Partikel 12 hier bereits nach dem Sinterprozess 52 zu der Sinterstruktur verdichtet sind. In dem Bereich, der hier in Figur 6 dargestellt ist, sind auch die Keimpartikel 14 angeordnet, die durch den Nachverdichtungsvorgang 26 auch mit einer bestimmten Ausrichtung in die Matrix des Materials des Magnetblechs 2 eingepresst sind. Die Keimpartikel 14 sind dabei Partikel aus einer Eisen-Kobalt-Legierung, sodass beim Sinterprozess 52 auch Diffusionsvorgänge zwischen den Partikeln 12 und den Eisen-Kobalt-Partikeln 14 stattfinden, sodass eine Durchlegierung in diesen ausgewählten Bereichen in den Enden der Zähne 34 stattfindet, sodass hier während des Sinterns eine Materialveränderung auftritt. Dies Einlegieren von Eisen-Kobalt-Partikeln 14 führt zu einem Anstieg der magnetischen Induktion im Bereich der Zähne 34 von etwa 1,2 T auf ca. 1,9 T. Dies wiederum bewirkt, dass Wirbelstromverluste im Bereich der Zähne 34 reduziert werden und somit weniger lokale Wärme in den Zähnen 34 auftritt. Dadurch wird die thermische Belastung des Magnetblechs 2 bzw. des gesamten Blechpaketes 36 im Bereich der Zähne 34 bzw. der Zahnstruktur 32 reduziert. Die weichmagnetischen Eigenschaften in der Ringstruktur 60 bleiben durch das dort vorhandene Reineisen bzw. im Wesentlichen Reineisen bestehen.

### Bezugszeichenliste

- 2: Magnetblech
- 3: elektrische Maschine
- 4: viskose Masse
- 6: Rakelverfahren
- 7: Schlickerziehverfahren
- 8: Trägerfläche
- 9: Förderband
- 10: flächiger Grünkörper
- 12: Partikel
- 14: Keimpartikel
- 16: Oberfläche
- 18: thermische Behandlung
- 22: Separierung
- 24: Magnetblechgrünkörper
- 26: Nachverdichtung
- 28: Stanzverfahren
- 29: Stanzwerkzeug
- 30: Walze
- 32: Zahnstruktur
- 34: Zähne
- 36: Blechpaket
- 38: Rotor
- 40: Stator
- 42: Gehäuse
- 44: Rakel
- 46: Partikelauftragsvorrichtung
- 48: Trocknungsvorrichtung
- 50: Entbinderungsvorrichtung
- 52: Sinterprozess
- 54: Sinterofen
- 56: Roboterarm
- 58: Querschnitt Keimpartikel
- 60: Ringstruktur

## Patentansprüche

1. Verfahren zu Herstellung eines Magnetblechs (2) einer elektrischen Maschine (3), umfassend folgende Schritte
- Aufbringen einer viskosen Masse (4) mittels eines Rakelverfahrens (6, 7) auf eine Trägerfläche (8), wobei ein flächiger Grünkörper (10) entsteht,
- wobei die viskose Masse (4) als funktionale Bestandteile Partikel (12) aufweist, die zu mehr als 96 gew. % aus Eisen bestehen,
- selektives Aufbringen von Keimpartikeln (14) auf die Oberfläche (16) des flächigen Grünkörpers,
- wobei die Keimpartikel (14) zu mehr als 90 Gew. % aus einer Eisen-Kobalt Legierung bestehen,
- Trocknen und Entbindern des flächigen Grünkörpers (10),
- Thermische Behandlung (18) des flächigen Grünkörpers (10) in Form eines Sinterprozesses.

2. Verfahren nach Anspruch 1, **dadurch gekennzeichnet, dass** das Rakelverfahren (6) ein Schlickerziehverfahren (7) oder ein Schablonendruckverfahren ist.

3. Verfahren nach Anspruch 2, **dadurch gekennzeichnet, dass** ein Schlickerziehverfahren (7) angewandt wird, bei dem ein kontinuierliches Band als flächiger Grünkörper (10) erzeugt wird auf das die Keimpartikel (14) selektiv aufgebracht werden.

4. Verfahren nach Anspruch 3, **dadurch gekennzeichnet, dass** nach dem selektiven Aufbringen der Keimpartikel (14) eine Separierung (22) eines Magnetblechgrünkörpers (24) aus dem flächigen Grünkörpers (10) erfolgt.

5. Verfahren nach einem der vorhergehenden Ansprüche, **dadurch gekennzeichnet, dass** eine Nachverdichtung (26) des flächigen Grünkörpers (10) oder des Magnetblechgrünkörpers (24) erfolgt, wodurch die Keimpartikel (14) in die Struktur des Grünkörpers (10, 24) eingebracht werden.

6. Verfahren nach einem der Ansprüche 3 bis 5, **dadurch gekennzeichnet, dass** das Separieren des Magnetblechgrünkörpers (24) aus dem flächigen Grünkörper (10) mittels eines Stanzverfahrens (28) oder eines Schneideverfahrens erfolgt.

7. Verfahren nach einem der Ansprüche 5 oder 6, **dadurch gekennzeichnet, dass** das Nachverdichten (26) mittels eines Rakels, einer Walze oder eines uniaxialen Pressens (30) erfolgt.

8. Verfahren nach einem der vorhergehenden Ansprüche, **dadurch gekennzeichnet, dass** die Keimpartikel (14) eine plattenförmige Struktur mit einem Aspektverhältnis des Plattenquerschnitts zur Plattenhöhe aufweisen, das größer als 5 ist.

9. Magnetblech hergestellt durch ein Verfahren nach einem der Ansprüche 1 bis 8, **dadurch gekennzeichnet, dass** das Magnetblech (2) eine Zahnstruktur (32) aufweist, die an eine Ringstruktur (60) angebunden ist, wobei die Ringstruktur durch eine gesinterte, weichmagnetische Eisen-Matrix besteht, die einen Eisenanteil von mehr als 96 Gew. % aufweist und die Zahnstruktur eine Eisen-Kobalt Legierung und/oder eine Eisen-Nitrid Verbindung umfasst.

10. Magnetblech nach Anspruch 9, **dadurch gekennzeichnet, dass** das Magnetblech (2) im Bereich der Zähne (34) eine maximale Sättigungsinduktion von mehr als 2,15 T aufweist.

11. Blechpaket für eine elektrische Maschine, zusammengesetzt aus einer Vielzahl von Magnetblechen (2) nach einem der Ansprüche 9 oder 10.

12. Elektrische Maschine mit einem Blechpaket (36) nach Anspruch 11 als Stator oder Rotor.
